# EUROPEAN PATENT SPECIFICATION

(11) **EP 3 696 117 B1**
(45) Date of publication and mention of the grant of the patent: **05.04.2023**
(21) Application number: 19215781.6
(22) Date of filing: 12.12.2019
(51) Int. Cl.: B65G 1/137, G07F 17/00

(54) **AUTOMATIC WAREHOUSE**
AUTOMATISCHES LAGER
ENTREPÔT AUTOMATIQUE

(30) Priority: 12.02.2019 IT 201900002023
(43) Date of publication of application: 19.08.2020
(73) Proprietor: PHARMATHEK S.r.L., 37136 Verona (IT)
(72) Inventor: DAL CORSO, Luca, I-3723 GREZZANA (Verona) (IT); FABBRI, Franco, I-37122 VERONA (IT); PAOLONI, Daniele, I-37138 VERONA (IT)
(74) Representative: Lunati & Mazzoni S.r.L.

(56) References cited:
- EP-A1- 2 960 184
- EP-A1- 3 251 980
- WO-A2-2006/042347
- DE-A1- 10 200 077
- JP-A- 2017 071 458
- US-A- 6 070 709

## Description

The present invention relates to an automatic warehouse, in particular for objects of a reduced weight and volume, of the type specified in the preamble of the first claim.

Automatic warehouses are currently known, for example, as described in patent documents DE-A-10200077, WO-A-2006/042347, US-A-6070709 and JP-A-2017071 458, wherein the document DE-A-10200077 discloses an automatic warehouse according to the preamble of claim 1 and a method for storing and automatically delivering objects according to the preamble of claim 8.

They are warehouses that comprise shelving units with automatic conveyor shelves, which collect and introduce objects into said shelving units.

Thus, the automatic warehouses have stations for loading and unloading the objects from the shelving units. Said stations are places from which or into which the conveyors take the objects to load them into the shelving units or to deposit the objects after collecting them from the shelving units.

Automatic warehouses are used frequently and advantageously in pharmacies and the like. In fact, such shops have numerous different catalogue products, which are generally light and easy to carry automatically and need to be readily available. Similar automatic warehouses are described, for example, in patents EP-B-2113472, EP-B-2113473 and EP-B-2862817 by the applicant itself.

Furthermore, new legislation has recently established that every single pack of medicine must be provided with a unique code number and that the sale thereof must be indicated and, consequently, a lack of availability thereof on the market. Consequently, automatic warehouses are particularly suitable, automating the entire process, for recording sales and signalling the respective unique codes.

The described prior art comprises various important drawbacks.

In particular, operators using the automatic warehouses risk confusing their own products with products of other operators.

Or operators risk collecting their products in an incomplete manner, relying too heavily on the delivery of the automatic warehouse, which, in some circumstances, may deliver products of the same, single order at intervals of time spaced apart by some or several seconds.

In this situation, the technical task underlying the present invention is to devise an automatic warehouse capable of substantially overcoming at least part of the stated drawbacks.

In the context of said technical task, one important purpose of the invention is to obtain an automatic warehouse that allows the operator not to confuse his/her own products with those of other operators.

Another important purpose of the invention is to provide an automatic warehouse that prevents operators from confusing their products with those of other operators. An additional important purpose of the invention to provide an automatic warehouse that prevents operators from collecting their own products in an incomplete manner. The technical task and specified purposes are achieved by means of an automatic warehouse according to claim 1 and by a method for storing and automatically delivering products according to claim 8.

Preferred technical solutions are highlighted in the dependent claims.

The features and advantages of the invention are clarified below by the detailed description of preferred embodiments of the invention, with reference to the accompanying drawing, wherein:

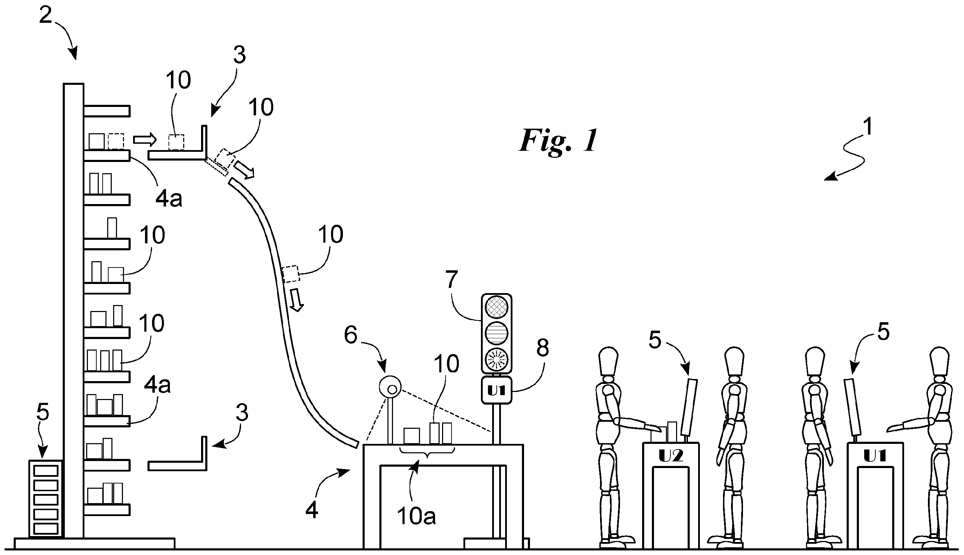

**Fig. 1** shows a diagram of the automatic warehouse according to the invention.

With reference to the Figures, the number **1** globally denotes the automatic warehouse according to the invention.

It is adapted to automatically store and supply objects **10,** such as boxes or the like to operators. Preferably, the objects 10 are objects with reduced dimensions, in the region of some decimetres in size. Preferably, the automatic warehouse 1 is made for shops, more preferably, for pharmacies. Consequently, the objects 10 are preferably objects on sale and various packs of medicines and the like, and the operators are preferably cashiers or shop assistants or pharmacists, who work close to cash registers and fixed workstations.

The automatic warehouse 1 comprises shelving units **2,** formed by a series of shelves for supporting objects 10, preferably stacked in one or more rows and as described, for example, in patents EP-B-2113472 and EP-B-2113473. The objects can be arranged on the shelving units 2 aligned or stacked or as required by the structures and logic.

The automatic warehouse 1 further comprises at least one automatic conveyor **3,** adapted to carry the objects 10 between the shelving units 2 and the stations subsequently described or between parts of the shelving units. Examples of automatic conveyors 3 are described in patents EP-B-2113473 and EP-B-2862817. The automatic warehouse 1 also comprises at least one depositing station **4,** and, preferably, at least one loading station **4a.**

The loading station 4a is preferably adapted to support the objects 10, which must be loaded, preferably by means of the conveyors 3, onto the shelving unit 2.

The depositing station 4 is preferably adapted to support or contain the objects 10 intended for one or, more preferably, several operators. Several depositing stations may be present and preferably at least one is used by several operators.

When the automatic warehouse 1 is arranged in a pharmacy, the depositing station 4 is preferably arranged close to the operators' cash registers. It is preferably also connected to the range of action of the conveyors 3 by means of slides or conveyor belts or similar. The depositing station 4 can consist of a support surface or manually removable containers, such as trays or other.

The automatic warehouse 1 also comprises electronic-type control means 5 for the automatic warehouse 1. The control means 5 can consist, for example, of one or more computers or electronic devices or other. For example, when the warehouse 1 is in a shop or pharmacy, the control means 5 can comprise cash registers and connected computers.

The control means 5 can be commanded individually by the operators, and they are configured to allow the operators to individually command the transport of objects 10 to their own depositing station 4. For example, the operators act directly by means of the cash register or other.

The operators command the supply of objects 10 in groups **10a** of objects 10. A group of objects 10a constitutes, for example, an order that a customer makes to an operator.

The automatic warehouse 1 also comprises scanning means **6,** functionally connected to the control means 5 and adapted to verify the presence of objects 10 in the depositing station 4. Said scanning means 6 can consist of a photocell, a sound wave sensor, such as ultrasound, a camera, a weight sensor or other. The scanning means 6 can be adapted to verify how many and/or which objects 10 are present in the depositing station 4 or, more simply, the scanning means 6 can be adapted to verify exclusively whether at least one object 10 is present in the depositing station 4. Briefly, as described below in further detail, the control means 5 are configured not to carry objects 10, belonging to a second group 10a, to the depositing station 4, when the depositing station is occupied by objects 10 belonging to a first group 10a, other than the first.

The automatic warehouse 1 also comprises first signalling means **7,** functionally connected to the control means 5 and configured to signal whether all of the objects 10 belonging to a determined group 10a are present in the depositing station 4. The first signalling means 7 can comprise coloured lights, for example, a green or a red light, depending on whether the order is ready or not, screens, acoustic means or other.

Preferably, the automatic warehouse 1 also comprises second signalling means **8,** functionally connected to the control means 5 and configured to signal the identification of the operator who must collect the objects 10 present in the depositing station 4. The second signalling means 8 can consist of a small screen, a mechanical selector, acoustic means or other. Furthermore, the second signalling means 8 can coincide with the first signalling means 7. For example, they can consist of a screen, which indicates whether all the objects 10 belonging to a determined group 10a are present in the depositing station 4 and the name of the operator who must collect the objects 10.

The first or second signalling means 7 or 8 can also signal other information, such as, for example, the state of operation of the automatic warehouse, the order number, potentially, a list of products not delivered in the case of an error, or other. Furthermore, if the depositing station 4 comprises a removable container, the first and/or second signalling means 7 and 8 can be constrained to the tray.

Finally, the control means 5 are configured, as specified better below, to record the completed delivery of the objects 10 after the scanning means 6, having verified the presence of the objects 10 in said depositing station 4, verify the absence of the objects 10 in the depositing station 4.

The invention comprises a new method for automatically storing and delivering objects 10 according to claim 8, which also preferably defines the operation of the automatic warehouse 1 described previously in structural terms.

The storage and delivery method is opportunely carried out by the previously described automatic warehouse 1.

Thus, the method comprises the storage of objects 10 in the shelving units 2, preferably of the type previously described, according to methods known in themselves and described, for example, in patent EP-B-2113472. During the step of loading objects 10, the code, whether unique or not, of the object 10 is preferably read and stored by the control means 5.

The method also comprises conveying the objects 10 from the shelving units 2, by means of at least one automatic conveyor 3, preferably of the type described previously, to at least one depositing station 4, preferably of the type described previously. Thus, each operator is preferably assigned to a single depositing station 4 and, on the contrary, a depositing station is preferably used by several operators. The single operators command the transport of groups 10a of objects 10 to the depositing station 4 by the control means 5. Substantially, if the method is actuated in a shop and, in particular, in a pharmacy, the operators command the supply of a group 10a of objects 10, generally consisting of an order made by a customer, to their own depositing station 4 from their workstation, by means of the cash register or similar means.

Consequently, the control means 5 command the automatic conveyors 3, which send the objects, one by one or in one or more groups, to the depositing station 4.

The control means 5 do not carry objects 10 belonging to a second group 10a to the depositing station 4, when said depositing station is occupied by objects 10 belonging to a first group 10a.

The control of the presence, or not, of the objects 10 is carried out by the previously described scanning means 6. Preferably, the scanning means 6 exclusively verify the presence, or not, of objects 10, independently of the number and type thereof, while the number and/or type of objects 10 present is preferably verified by analysing the movement of the automatic conveyors 3. Alternatively, the scanning means 6 could comprise cameras or similar, adapted to verify the number and/or type of objects 10, too. According to the invention, the control means 5 verify the presence of at least one of said objects 10 in the depositing station 4 by means of said scanning means 6 and they verify that all of said objects 10 belonging to a determined group 10a are present in said depositing station 4 by analysing the movement of said at least one automatic conveyor 3.

The first signalling means 7 signal whether all the objects 10 belonging to a determined group 10a are present in the depositing station 4, by means of the previously described potential light and/or sound signals. The operator only collects his/her objects 10 when signalled by the means 7, so as to always collect the complete order.

Furthermore, preferably, the second signalling means 8 signal an identification of the operator who must collect the objects 10 present in the depositing station 4. For example, one screen can indicate the name or a reference of the operator who made the order, so as to avoid confusing orders of different operators.

Finally, advantageously, the control means 5 record the completed delivery of the objects 10 after the scanning means 6 have verified the removal thereof from the station 4. Consequently, the scanning means 6 first verify the presence of objects 10 in the depositing station 4, which can also be verified by analysing the movement of the automatic conveyors 3, and then, the scanning means 6 verify the absence of objects 10 from the depositing station 4.

Consequently, the control means 5 record the completed delivery, also possibly after a successive passage of the objects 10 in the cash register. If the latter are medicines, the system records the sale of the medicine together with the specific unique code number, in keeping with EU-FMD legislation. In fact, preferably, the control means 5 also comprise systems for reading and storing the codes, whether unique or not, of the objects 10, for example, on loading the latter in the automatic warehouse 1.

The automatic warehouse 1 and the automatic storage and delivery method according to the invention offers important advantages.

In fact, they allow operators to always collect their products in a complete manner. Furthermore, the automatic warehouse 1 and described method allow operators not to confuse their products with the products of other operators and to always collect the complete order.

Finally, also the recording of the sale of the product with the specific unique code, in keeping with EU-FMD legislation, is easier and quicker and less subject to errors. The invention is subject to changes falling within the scope of the inventive concept defined by the claims.

## Claims

1. An automatic warehouse (1), adapted to automatically store and supply objects (10) to operators comprising:
- shelving units (2), formed by a series of shelves for said objects (10),
- at least one automatic conveyor (3),
- at least one depositing station (4), in which said objects (10), intended for at least one operator, are placed,
- control means (5), of the electronic type, for said automatic warehouse (1), that can be commanded individually by said operators, said control means (5) being configured to individually allow said operators to command the transport of groups (10a) of said objects (10) to said depositing station (4), and not to carry said objects (10), belonging to a second of said groups (10a), to said depositing station (4), when said depositing station is occupied by said objects (10) belonging to a first of said groups (10a).
- scanning means (6), functionally connected to said control means (5) and adapted to verify the presence of said objects (10) in said depositing station (4),
- and **characterised in that** said control means (5) are configured to verify the presence of at least one of said objects (10) in said depositing station (4) by means of said scanning means (6) and they verify that all of said objects (10) belonging to a determined group (10a) are present in said depositing station (4) by analysing the movement of said at least one automatic conveyor (3), wherein the automatic warehouse (1) comprises first signalling means (7), functionally connected to said control means (5) and configured to signal whether all of said objects (10) belonging to a determined group (10a) are present in said depositing station (4).

2. An automatic warehouse (1) according to one preceding claim, comprising second signalling means (8), functionally connected to said control means (5) and configured to identify said operator who must collect said objects (10) present in said depositing station (4).

3. An automatic warehouse (1) according to one preceding claim, wherein said control means (5) are configured to record the completed delivery of said objects (10) after said scanning means (6), having verified the presence of said objects (10) in said depositing station (4), verify the absence of said objects (10) in said depositing station (4).

4. An automatic warehouse (1) according to at least claims 1 and 3, wherein said first signalling means (7) and said second signalling means (8) coincide.

5. An automatic warehouse (1) according to one preceding claim, wherein the scanning means (6) comprise a photocell.

6. An automatic warehouse (1) according to one preceding claim, wherein the scanning means (6) comprise a camera.

7. An automatic warehouse (1) according to one preceding claim, wherein the scanning means (6) comprise a sound wave sensor.

8. A method for storing and automatically delivering objects (10), by means of an automatic warehouse (1), adapted to automatically store and supply said objects (10):
- said automatic warehouse (1) comprises:
- control means (5), of the electronic type, that can be individually commanded by said operators, and
- scanning means (6), functionally connected to said control means (5) and adapted to verify the presence of said objects (10) in said depositing station (4),
- said operators command the transport of groups (10a) of said objects (10) to said depositing station, by means of said control means (5),
- said control means (5) do not carry said objects (10), belonging to a second of said groups (10a), to said depositing station (4), when said depositing station is occupied by said objects (10) belonging to a first of said groups (10a).
said method consisting of:
- storing said objects (10) in shelving units (2), formed by a series of shelves for said objects (10),
- conveying said objects (10), by means of at least one automatic conveyor (3), from said shelving units (2) to at least one depositing station (4), to re-supply at least one operator,
- and said method being **characterised in that:** said control means (5) verify the presence of at least one of said objects (10) in said depositing station (4) by means of said scanning means (6) and they verify that all of said objects (10) belonging to a determined group (10a) are present in said depositing station (4) by analysing the movement of said at least one automatic conveyor (3),
wherein said automatic warehouse (1) comprises first signalling means (7), functionally connected to said control means (5) and wherein said first signalling means (7) signal whether all of said objects (10) belonging to a determined group (10a) are present in said depositing station (4).

9. A method according to claim 8, wherein said automatic warehouse (1) comprises second signalling means (8), functionally connected to said control means (5), and wherein said second signalling means (8) signal an identification of said operator who must collect said objects (10) present in said depositing station (4).

10. An automatic warehouse (1) according to at least one of the claims 8-9, wherein said control means (5) record the completed delivery of said objects (10) after said scanning means (6), the control means (5) having verified the presence of said objects (10) in said depositing station (4), verify the absence of said objects (10) in said depositing station (4).

## Patentansprüche

1. Automatisches Lager (1), das dazu dient, automatisch Gegenstände (10) zu lagern und dem Bediener zu liefern, das Folgendes umfasst:
- Regalanlagen (2), die aus mehreren Regalen für die genannten Gegenstände (10) bestehen,
- mindestens ein automatisches Förderband (3),
- mindestens eine Lagerstation (4), in der die genannten Gegenstände (10) untergebracht werden, die für mindestens einen Bediener bestimmt sind,
- elektronische Kontrollmittel (5) des genannten automatischen Lagers (1), die individuell durch die genannten Bediener gesteuert werden können, die genannten Kontrollmittel (5) sind dazu konfiguriert, den genannten Bedienern zu ermöglichen, den Transport dieser Gruppen (10a) individuell zur genannten Lagerstation (4) zu steuern, um nicht die genannten Gegenstände (10), die einer zweiten dieser Gruppen (10a) angehören, zur genannten Lagerstation (4) zu transportieren, wenn die genannte Lagerstation durch die genannten Gegenstände (10) besetzt ist, die einer ersten der genannten Gruppen (10a) angehören.
- Abtastmittel (6), die funktional mit den genannten Kontrollmitteln (5) verbunden sind und die dazu dienen, das Vorhandensein der genannten Gegenstände (10) in der genannten Lagerstation (4) zu prüfen,
- und **dadurch gekennzeichnet, dass** die genannten Kontrollmittel (5) konfiguriert sind, um das Vorhandensein von mindestens einem der genannten Gegenstände (10) in der genannten Lagerstation (4) durch die genannten Abtastmittel (6) zu prüfen und durch die Bewegungsanalyse des genannten mindestens einen automatischen Förderbandes (3) zu prüfen, ob alle genannten Gegenstände (10), die einer bestimmten Gruppe (10a) angehören, in der genannten Lagerstation (4) vorhanden sind, wobei das genannte automatische Lager (1) erste Anzeigemittel (7) umfasst, die funktional mit den genannten Kontrollmitteln (5) verbunden sind und konfiguriert sind, um anzuzeigen, ob alle genannten Gegenstände (10), die einer bestimmten Gruppe (10a) angehören, in der genannten Lagerstation (4) vorhanden sind.

2. Automatisches Lager (1) nach einem vorhergehenden Anspruch, der zweite Anzeigemittel (8) umfasst, die funktional mit den genannten Kontrollmitteln (5) verbunden sind und konfiguriert sind, um den genannten Bediener zu identifizieren, der die genannten Gegenstände (10) abholen muss, die in der genannten Lagerstation (4) vorhanden sind.

3. Automatisches Lager (1) nach einem vorhergehenden Anspruch, in dem die genannten Kontrollmittel (5) konfiguriert sind, um die erfolgte Lieferung der genannten Gegenstände (10) zu registrieren, nachdem die genannten Abtastmittel (6), nachdem sie das Vorhandensein der genannten Gegenstände (10) in der genannten Lagerstation (4) geprüft haben, das Fehlen der genannten Gegenstände (10) in der genannten Lagerstation (4) prüfen.

4. Automatisches Lager (1) nach mindestens einem der Ansprüche 1 und 3, in denen die genannten ersten Anzeigemittel (7) und die genannten zweiten Anzeigemittel (8) übereinstimmen.

5. Automatisches Lager (1) nach einem vorhergehenden Anspruch, in dem die Abtastmittel (6) eine Fotozelle umfassen.

6. Automatisches Lager (1) nach einem vorhergehenden Anspruch, in dem die Abtastmittel (6) eine Kamera umfassen.

7. Automatisches Lager (1) nach einem vorhergehenden Anspruch, in dem die Abtastmittel (6) einen Schallwellensensor umfassen.

8. Lagerungs- und automatisches Lieferverfahren der Gegenstände (10) durch ein automatisches Lager (1), das dazu dient, die genannten Gegenstände (10) zu lagern und automatisch zu liefern:
- wobei das genannte automatische Lager (1) Folgendes umfasst:
- elektronische Kontrollmittel (5) des genannten automatischen Lagers (1), die individuell durch die genannten Bediener gesteuert werden können, und
- Abtastmittel (6), die funktional mit den genannten Kontrollmitteln (5) verbunden sind und die dazu dienen, das Vorhandensein der genannten Gegenstände (10) in der genannten Lagerstation (4) zu prüfen,
- der genannte Bediener steuert den Transport der Gruppen (10a) der genannten Gegenstände (10) zur genannten Lagerstation (4) durch die genannten Kontrollmittel (5),
- die genannten Kontrollmittel (5) transportieren die genannten Gegenstände (10) nicht, die einer zweiten der genannten Gruppen (10a) angehören, zur genannten Lagerstation (4), wenn die genannte Lagerstation durch die genannten Gegenstände (10) besetzt ist, die einer ersten der genannten Gruppen (10a) angehören,
- die genannte Methode besteht aus folgenden Schritten:
- Lagerung der genannten Gegenstände (10) in Regalanlagen (2), die aus mehreren Regalen für die genannten Gegenstände (10) bestehen,
- Beförderung der genannten Gegenstände (10) durch mindestens ein automatisches Förderband (3) von den genannten Regalanlagen (2) zu mindestens einer Lagerstation (4), um mindestens einen Bediener zu beliefern,
- und das genannte Verfahren ist **dadurch gekennzeichnet, dass**: die genannten Kontrollmittel (5) das Vorhandensein von mindestens einem der genannten Gegenstände (10) in der genannten Lagerstation (4) durch die genannten Abtastmittel (6) prüfen und durch die Bewegungsanalyse des genannten mindestens einen automatischen Förderbandes (3) prüfen, ob alle genannten Gegenstände (10), die einer bestimmten Gruppe (10a) angehören, in der genannten Lagerstation (4) vorhanden sind, wobei das genannte automatische Lager (1) erste Anzeigemittel (7) umfasst, die funktional mit den genannten Kontrollmitteln (5) verbunden sind und in denen die genannten ersten Anzeigemittel (7) anzeigen, ob alle genannten Gegenstände (10), die einer bestimmten Gruppe (10a) angehören, in der genannten Lagerstation (4) vorhanden sind.

9. Verfahren nach Anspruch 8, in dem das genannte automatische Lager (1) zweite Anzeigemittel (8) enthält, die funktional mit den genannten Kontrollmitteln (5) verbunden sind und in denen die genannten zweiten Anzeigemittel (8) eine Identifizierung des genannten Bedieners anzeigen, der die genannten Gegenstände (10) abholen muss, die in der genannten Lagerstation (4) vorhanden sind.

10. Automatisches Lager (1) nach mindestens einem der Ansprüche 8-9, in denen die genannten Kontrollmittel (5) die erfolgte Lieferung der genannten Gegenstände (10) registrieren, nachdem die genannten Abtastmittel (6), nachdem die Kontrollmittel (5) das Vorhandensein der genannten Gegenstände (10) in der genannten Lagerstation (4) geprüft haben, das Fehlen der genannten Gegenstände (10) in der genannten Lagerstation (4) prüfen.

## Revendications

1. Entrepôt automatique (1), apte à stocker et fournir automatiquement des objets (10) à des opérateurs comprenant :
- des rayonnages (2), composés d'une série de planches pour lesdits objets (10),
- au moins un convoyeur automatique (3),
- au moins une station de dépôt (4), dans laquelle lesdits objets (10), destinés à au moins un opérateur, sont rangés,
- des moyens de commande (5), de type électronique, dudit entrepôt automatique (1), qui peuvent être contrôlés individuellement par lesdits opérateurs, lesdits moyens de commande (5) pouvant être configurés pour permettre auxdits opérateurs de contrôler individuellement le transport de groupes (10a) desdits objets (10) jusqu'à ladite station de dépôt (4), afin de ne pas transporter lesdits objets (10), appartenant à un second desdits groupes (10a), à ladite station de dépôt (4), lorsque ladite station de dépôt est occupée par lesdits objets (10) appartenant à un premier desdits groupes (10a).
- des moyens d'analyse (6), reliés fonctionnellement auxdits moyens de commande (5) et aptes à vérifier la présence desdits objets (10) dans ladite station de dépôt (4),
- et **caractérisé en ce que** lesdits moyens de commande (5) sont configurés pour vérifier la présence d'au moins un desdits objets (10) dans ladite station de dépôt (4) par l'intermédiaire desdits moyens d'analyse (6) et ils vérifient que tous lesdits objets (10) appartenant à un groupe déterminé (10a) soient présents dans ladite station de dépôt (4) par l'analyse du mouvement dudit au moins un convoyeur automatique (3), dans lequel ledit entrepôt automatique (1) comprend des premiers moyens de signalisation (7), reliés fonctionnellement auxdits moyens de commande (5) et configurés pour signaler que tous lesdits objets (10) appartenant à un groupe déterminé (10a) sont présents dans ladite station de dépôt (4).

2. Entrepôt automatique (1) selon une revendication précédente, comprenant des seconds moyens de signalisation (8), reliés fonctionnellement auxdits moyens de commande (5) et configurés pour identifier ledit opérateur qui doit retirer lesdits objets (10) présents dans ladite station de dépôt (4).

3. Entrepôt automatique (1) selon une revendication précédente, dans lequel lesdits moyens de commande (5) sont configurés pour enregistrer la confirmation de livraison desdits objets (10) après que lesdits moyens d'analyse (6), suite à la vérification de la présence desdits objets (10) dans ladite station de dépôt (4), aient vérifié l'absence desdits objets (10) dans ladite station de dépôt (4).

4. Entrepôt automatique (1) selon au moins les revendications 1 à 3, dans lequel lesdits premiers moyens de signalisation (7) et lesdits seconds moyens de signalisation (8) coïncident.

5. Entrepôt automatique (1) selon une revendication précédente, dans lequel des moyens d'analyse (6) comprennent une cellule photo-électrique.

6. Entrepôt automatique (1) selon une revendication précédente, dans lequel des moyens d'analyse (6) comprennent une caméra.

7. Entrepôt automatique (1) selon une revendication précédente, dans lequel des moyens d'analyse (6) comprennent un capteur acoustique.

8. Procédé de stockage et de livraison automatique d'objets (10), par l'intermédiaire d'un entrepôt automatique (1), apte à stocker et fournir automatiquement lesdits objets (10) :
- ledit entrepôt automatique (1) comprenant :
- des moyens de commande (5), de type électronique, dudit entrepôt automatique (1), qui peuvent être contrôlés individuellement par lesdits opérateurs, et
- des moyens d'analyse (6), reliés fonctionnellement auxdits moyens de commande (5) et aptes à vérifier la présence desdits objets (10) dans ladite station de dépôt (4),
- ledit opérateur contrôle le transport de groupes (10a) desdits objets (10) à ladite station de dépôt (4), au moyen desdits moyens de commande (5),
- lesdits moyens de commande (5) ne transportent pas lesdits objets (10), appartenant à un second desdits groupes (10a), à ladite station de dépôt (4), lorsque ladite station de dépôt est occupée par lesdits objets (10) appartenant à un premier desdits groupes (10a),
- ledit procédé consiste à :
- stocker lesdits objets (10) dans des rayonnages (2), composés d'une série de planches pour lesdits objets (10),
- acheminer lesdits objets (10), par l'intermédiaire d'au moins un convoyeur automatique (3), desdits rayonnages (2) vers au moins une station de dépôt (4), pour approvisionner au moins un opérateur,
- et ledit procédé étant **caractérisé en ce que :** lesdits moyens de commande (5) vérifient la présence d'au moins un desdits objets (10) dans ladite station de dépôt (4) par l'intermédiaire desdits moyens d'analyse (6) et ils vérifient que tous lesdits objets (10) appartenant à un groupe déterminé (10a) soient présents dans ladite station de dépôt (4) par l'analyse du mouvement dudit au moins un convoyeur automatique (3), dans lequel ledit entrepôt automatique (1) comprend des premiers moyens de signalisation (7), reliés fonctionnellement auxdits moyens de commande (5) et dans lequel lesdits premiers moyens de signalisation (7) signalent que tous lesdits objets (10) appartenant à un groupe déterminé (10a) sont présents dans ladite station de dépôt (4).

9. Procédé selon la revendication 8, dans lequel ledit entrepôt automatique (1) comprend des seconds moyens de signalisation (8), reliés fonctionnellement auxdits moyens de commande (5), et dans lequel lesdits seconds moyens de signalisation (8) signalent une identification dudit opérateur qui doit retirer lesdits objets (10) présents dans ladite station de dépôt (4).

10. Entrepôt automatique (1) selon au moins l'une des revendications 8-9, dans lequel des moyens de commande (5) enregistrent la confirmation de livraison desdits objets (10) après que lesdits moyens d'analyse (6), suite à la vérification de la présence desdits objets (10) de la part des moyens de commande (5) dans ladite station de dépôt (4), aient vérifié l'absence desdits objets (10) dans ladite station de dépôt (4).
